# EUROPÄISCHE PATENTANMELDUNG

(11) **EP 0 745 802 A1**
(43) Veröffentlichungstag der Anmeldung: **04.12.1996**
(21) Anmeldenummer: 96108542.0
(22) Anmeldetag: 29.05.1996
(51) Int. Cl.: F16L 37/34, F16L 37/40

(54) **Schnellverbindungsstück für Druckmedien**

(30) Priorität: 31.05.1995 IT MI951127
(71) Anmelder: FASTER S.r.l., I-20066 Melzo Milano (IT)
(72) Erfinder: Arosio, Massimo, 26027 Rivolta d'Adda (IT)
(74) Vertreter: Mayer, Hans Benno, Dipl.-Ing.

(57) **Zusammenfassung**

Das Schnellverbindungsstück weist einen Anschluss zur Verbindung einer ein Medium zuführenden Rohrleitung und eine Öffnung auf, die zur Einführung eines Anschlusses absperrbar ist, über den ein Verbraucher mit dem Medium versorgt wird.

Im Inneren des Schnellverbindungsstückes befindet sich ein fester Schaft (10), der einen Ventilteller bildet und mit einem Ventilsitz zusammenwirkt, der durch entgegen der Kraft von federelastischen Mitteln verschiebbare, rohrförmige Elemente (8) gebildet ist. Das der Einlaufseite des Druckmediums zugekehrte Schaftende (22) weist eine Umfangsnut (13) auf, die eine Tragscheibe (11) formschlüssig aufnimmt, die aus zwei zusammenfügbaren Halbkörpern (12) besteht, die einen den Schaft (10) im Bereich der Umfangsnut umfassenden mittleren Sitz (31) aufweisen. Jeder Halbkörper (12) weist zumindest eine Durchlassöffnung (25) für das zugeführte Medium auf. Die zusammengebaute Tragscheibe (11) ist in einem im Körper des Schnellverbindungsstückes vorgesehenen Sitz (30) eingesetzt, mit dem sie fest verbunden ist.

## Beschreibung

Die Erfindung betrifft ein Schnellverbindungsstück zur Verteilung von Druckmedien, das aus einem Anschluss zur Verbindung einer ein Medium zuführenden Rohrleitung und aus einer Öffnung besteht, die zur Einführung eines Anschlusses absperrbar ist, über den ein Verbraucher mit dem Medium versorgt wird, wobei im Innern des Schnellverbindungsstückes ein fester Schaft mit einem Ventilteller vorgesehen ist, der zusammen mit entgegen der Kraft von federelastischen Mitteln verschiebbaren, rohrförmigen Elementen einen Ventilsitz bildet.

Es sind Schnellverbindungsstücke für Druckmedien, insbesondere ebenflächige Schnellverbindungsstücke, bekannt, bei denen das der Druckmediumeinlaufseite zugekehrte und mit einem Aussengewinde versehene Schaftende in eine axial im Verbindungstück vorgesehene Durchgangsbohrung eingeschraubt werden kann.

Das Schraubenende des Schaftes, das aus der Axialbohrung des Stützkörpers herausragt, muss eine Kerbe aufweisen, die zum Festhalten des Schaftes dient, während eine am freien Ende des Schaftes angeschraubte Kontermutter fest angezogen wird.

Diese Kontermutter ist erforderlich, um ein unerwünschtes Ausdrehen des Schaftes aus dem Körper des Verbindungsstückes zu vermeiden.

Der aus einem einzigen Stück bestehende Körper des Verbindungsstückes weist mehrere Durchgangsbohrungen auf, durch die das Druckmedium fliessen soll.

Die bekannten Schnellverbindungsstücke weisen den Nachteil auf, dass die Herstellung ihres aus einem einzigen Stück bestehenden Körpers mit sehr grossem technischen Aufwand verbunden ist, weil der Körper mit einer axialen Gewindebohrung und ausserdem mit mehreren in einer Wand und um die Axialbohrung herum angeordneten Durchgangsbohrungen zu versehen ist.

Die Anwesenheit der einzelnen Durchgangsbohrungen führt zu einer unerwünschten Drosselung des durchströmenden Druckmediums. Ein weiterer Nachteil der bekannten Schnellverbindungsstücke besteht darin, dass die durch Einund Ausschrauben des Schaftes gegenüber dem aus einem einzigen Stück bestehenden Körper erfolgende Montage des Verbindungsstückes kompliziert und sehr zeitaufwendig ist.

Ausserdem besteht die Gefahr, dass sich der Schaft unerwünscht aus dem aus einem einzigen Stück bestehenden Körper auslöst, falls die am Schaft angeschraubte Kontermutter nicht fest genug angezogenen ist, was zu Betriebsstörungen oder gar zum Bruch des Schnellverbindungsstückes und folglich zu Beschädigungen wegen Druckölverluste führen kann.

Der Erfindung liegt die Aufgabe zugrunde, ein neues Schnellverbindungsstück zu schaffen, das die Nachteile des bisherigen Standes der Technik behebt und sich einfach herstellen und rasch zusammenbauen lässt.

Diese Aufgabe wird erfindungsgemäss durch ein Schnellverbindungsstück für Druckmedien gelöst, das einen Anschluss zur Verbindung einer ein Medium zuführenden Rohrleitung und eine Öffnung aufweist, die zur Einführung eines Anschlusses absperrbar ist, über den ein Verbraucher mit dem Medium versorgt wird, wobei im Inneren des Schnellverbindungsstückes ein fester Schaft vorgesehen ist, der einen Ventilteller aufweist, der mit einem Ventilsitz zusammenwirkt, der durch entgegen der Kraft von federelastischen Mitteln verschiebbare, rohrförmige Elemente gebildet ist, dadurch gekennzeichnet, dass das der Druckmediumeinlaufseite zugekehrte Schaftende eine Umfangsnut aufweist, die eine Tragscheibe formschlüssig aufnimmt, die aus zwei zusammenfügbaren Halbkörpern besteht, die einen den Schaft im Bereich der Umfangsnut umfassenden mittleren Sitz aufweisen, dass jeder Halbkörper zumindest eine Durchlassöffnung für das zugeführte Medium aufweist und dass die zusammengebaute Tragscheibe in einem im Körper des Schnellverbindungsstückes vorgesehenen Sitz eingesetzt und mit demselben fest verbunden ist.

Das nach der Erfindung ausgeführte Schnellverbindungsstück weist folgende Vorteile auf:
der Schaft ist nicht mehr - wie beim Stand der Technik - durch ein Gewinde am Körper des Schnellverbindungsstückes befestigt, sondern wird durch den Formschluss zwischen
einer Tragscheibe und dem Schaft sowie dem Körper des Verbindungsstückes fest in seiner Lage gehalten. Dieser Formschluss erlaubt einen einfachen und raschen Zusammenbau des neuen Schnellverbindungsstückes.

Dank dem neuen durch die Erfindung vorgeschlagenen Aufbau des Schnellverbindungsstückes, können sowohl die Herstellung als auch der Zusammenbau desselben mit einer beträchtlichen Zeitersparnis vorgenommen werden.

Bei einer bevorzugten Ausführungsform weist jeder Halbkörper eine zweckmässig bogenförmig verlaufende, durchgehende Öffnung auf.

Die Tragscheibe weist zum Beispiel nur zwei bogenförmige Bohrungen auf, die eine beträchtliche Herabsetzung des Strömungswiderstandes und daher eine Optimierung der Durchströmung des Druckmediums ohne Bildung von unerwünschten Wirbeln gestatten.

Die im Halbkörper vorgesehene Öffnung weist zweckmässig die Form eines an einem Halbkreis entlang verlaufenden Bogens auf. Das der Mediumeinlaufseite zugekehrte Schaftende ist vorzugsweise halbkugelförmig. Eine solch strömungsgünstige Form des Schaftendes ermöglicht eine ungehinderte, lineare Strömung des Druckmediums durch den zur Druckmediumeinlaufseite führenden Durchflusskanal.

Wahlweise kann das der Mediumeinlaufseite zugekehrte Schaftende auch parabelförmig ausgebildet sein.

Die Halbkörper sind zweckmässig im Sinterverfahren hergestellt. Dadurch können die Tragscheiben rasch und kostengünstig serienmässig gefertigt werden.

Wahlweise können die Halbkörper auch aus druckgegossenen Körpern bestehen und/oder aus Kunststoff hergestellt sein.

Der Gegenstand der Erfindung wird nachstehend an Hand einer nur beispielsweise in den beiliegenden Zeichnungen dargestellten Ausführungsform näher beschrieben. Es zeigen:
Figur 1 das zusammengebaute Schnellverbindungsstück;
Figur 2 die Schnittansicht des zusammengebauten Schnellverbindungsstückes nach Figur 1;
Figur 3 bis 5 Seitenansichten der Verfahrensschritte zum Zusammenbau des Schnellverbindungsstückes; und
Figur 6 bis 8 Vorderansichten der Verfahrensschritte zum Zusammenbau des Schnellverbindungsstückes.

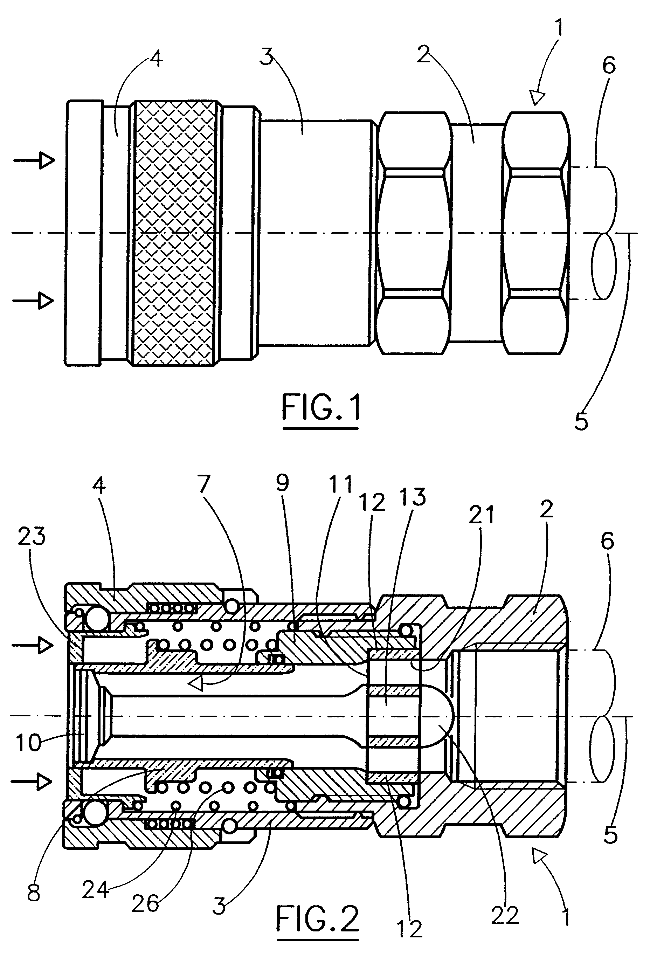

Das in den Figuren 1 und 2 dargestellte und insgesamt mit 1 bezeichnete Schnellverbindungsstück weist einen in diesem Fall als Sechskantmutter ausgeführten einlaufseitigen Anschluss 2 und einen um den Anschluss 2 drehbaren Ring 4 auf. Am Anschluss 2 ist gemäss der bekannten Technik ein rohrförmiges Element 3 angeschraubt.

Der einlaufseitige Anschluss 2 ist mit einer in Figur 2 strichpunktiert angedeuteten Rohrleitung 6 verbunden.

Über diese Rohrleitung wird ein Druckmedium zugeführt, das aus der Rohrleitung 6 in einen durch das Schnellverbindungsstück 1 laufenden Kanal fliesst.

Das Schnellverbindungsstück 1, das symmetrisch zu der in Strömungsrichtung verlaufenden Achse 5 ausgebildet ist, weist in seinem Inneren eine Öffnungsbuchse 8 und einen Stützkörper 9 auf. Diese Elemente sind entgegen der Kraft eines federelastischen Mittels 26 verschiebbar, das in diesem Fall eine Schraubenfeder ist.

Die Buchse 8 und der Körper 9 nehmen in ihrem Inneren einen festen Schaft 10 auf, der als Strömungssperrmittel dient.

Die Buchse 8 weist einen Ventilsitz auf und arbeitet mit dem Ventilteller des Schaftes 10 zusammen. Die Aufgabe der Buchse 8 besteht darin, den vom Medium durchströmten Kanal 7 im Auslaufbereich des Schnellverbindungsstückes 1 zu öffnen bzw. zu schliessen.

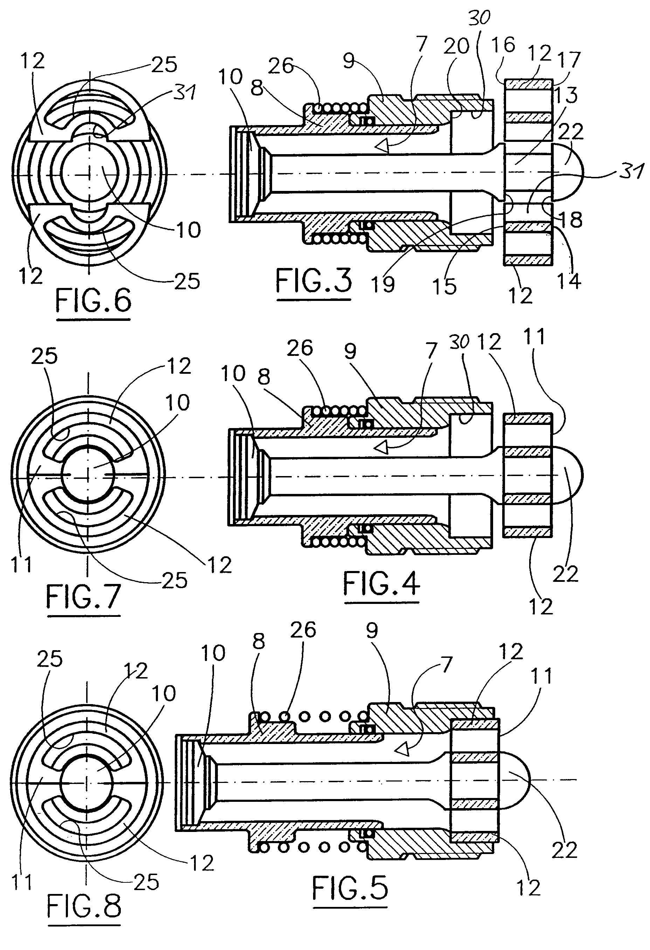

Erfindungsgemäss ist zwischen dem Schaft 10 und dem Körper 9 eine Tragscheibe 11 formschlüssig angeordnet. Die Tragscheibe 11 besteht aus zwei tellerförmigen Halbkörpern 12. Jeder Halbkörper 12 weist eine Durchgangsöffnung 25 auf (siehe Figur 6). Die zusammengebaute Tragscheibe 11 bildet einen mittleren Sitz, mit dem die Scheibe 11 in eine am Ende des Schaftes 10 vorgesehene Umfangsnut 13 eingreifen kann. Gleichzeitig ist die Scheibe 11 in einem im Körper 9 des Schnellverbindungsstückes 1 vorgesehenen Sitz 30 eingesetzt, mit dem sie fest verbunden ist. Die beiden Halbkörper stützen den Schaft 10 ab und greifen mit ihrem Sitz 13 in die Umfangsnut 13 des Schaftes 10 ein.

Der Körper 9 wird durch die mit den Gegenflächen 18, 19, 20, 21 des Schaftes 10, des Körpers 9 und des einlaufseitigen Anschlusses 2 zusammenwirkenden Anschlagflächen 14, 15, 16, 17 der Tragscheibe 11 (entgegen der Druckkraft der Feder 26) in einer Ruhestellung gehalten (siehe Figur 2 und 3).

In den Ansichten von Figur 1 und 2 ist der Anschluss 2 am Körper 9 angeschraubt.

An seinem der Mediumeinlaufseite zugekehrten Ende 22 weist der Schaft 10 die Form einer Halbkugel bzw. einen parabelförmigen Verlauf auf und bildet dabei eine abgestufte Einlaufschräge für das Druckmedium. Die Umfangsnut 13 befindet sich in der Nähe des Endes 22 des Schaftes 10. Das Schnellverbindungsstück 1 nimmt eine Hilfsbuchse 23 auf, die eine ebene Fläche bildet und sich bis zur Innenseite des Schnellverbindungsstückes 1 verschieben lässt, und zwar entegegen der Druckkraft des federelastischen Mittels 24, das zwischen der Hilfsbuchse 23 und dem einlaufseitigen Anschluss 2 angeordnet ist.

Aus den Figuren 3, 4 und 6, 7 geht die Tatsache hervor, dass die Halbkörper 12 in die Nut 13 des Schaftes 10 eingesetzt werden. Der Körper 9 wird durch ein nicht dargestelltes Hilfsmittel entgegen der Druckkraft der Feder 26 verschoben.

Die Figuren 5 und 8 zeigen die zusammengebauten Halbkörper 12, wobei der Körper 9 entgegen der Druckkraft der Feder 26 in einer Ruhestellung gehalten wird. Die Halbkörper 12 weisen eine bogenförmige Öffnung 25 auf, die dem Querschnitt des vom Druckmedium durchströmten Kanals 7 entspricht.

Das von der Erfindung vorgeschlagene Schnellverbindungsstück 1 kann daher zunächst vormontiert (Figur 5) und anschliessend vollständig zusammengebaut werden (Figur 2).

Wenn das Schnellverbindungsstück 1 mit einer äusseren, das Druckmedium zuführenden Rohrleitung 6 in Verbindung steht, ist das Schnellverbindungsstück 1 dicht geschlossen, wie in Figur 2 dargestellt. Mit der Einführung eines Anschlusses, über den ein nicht dargestellter Verbraucher mit dem Medium versorgt wird, wird auf die Hilfsbuchse 23 eine in Pfeilrichtung (Figur 1 und 2) verlaufende Druckkraft ausgeübt, die entgegen der Druckkraft der Feder 24 die Verschiebung der Buchse 23 in Richtung der Öffnungsbuchse 8 auslöst. Dabei bleibt das Schnellverbindungsstück 1 noch geschlossen. Im Augenblick, in dem die Hilfsbuchse 23 mit der Öffnungsbuchse 8 in Berührung kommt, läst die von aussen ausgeübte Druckkraft die gleichzeitige Verschiebung der Buchsen 23 und 8 entgegen den durch die Federn 24 und 26 ausgeübten Druckkräften aus.

Mit der Verschiebung der Öffnungsbuchse 8 fängt das Druckmedium an, durch den Kanal 7 und durch die Auslaufseite zum äusseren Verbraucher hin zu fliessen.

Sobald die äussere Druckkraft nachlässt, kehren aufgrund der von den Federn 24 und 26 ausgeübten Druckkräfte die Buchsen 23 und 8 in die in Figur 2 dargestellte Ruhestellung des Schnellverbindungsstückes 1 selbsttätig zurück.

Durch die Anwesenheit der Tragscheibe 11 mit den bogenförmigen Öffnungen 25 und die besondere Ausbildung des Endes 22 des Schaftes 10 wird der Fluss des Druckmediums durch das Schnellverbindungsstück 1 strömungstechnisch optimiert.

Erfindungsgemäss kann das Ende 22 des Schaftes 10 auch eine andere strömungsgünstige Form, zum Beispiel einen parabelförmigen Verlauf, aufweisen.

Die Halbkörper 12 werden vorzugsweise im Sinter- oder Giessverfahren hergestellt. Es können auch Halbkörper aus Kunststoff verwendet werden.

## Patentansprüche

1. Schnellverbindungsstück (1) für Druckmedien, mit einem Anschluss (2) zur Verbindung einer ein Medium zuführenden Rohrleitung (6) und einer absperrbaren Öffnung, die die Einführung eines Anschlusses gestattet, über den ein Verbraucher mit dem Medium versorgt wird, wobei im Inneren des Schnellverbindungsstückes (1) ein fester Schaft (10) vorgesehen ist, der einen Ventilteller bildet, der mit einem in einem rohrförmigen Element (8) vorgesehenen Ventilsitz entgegen der Federkraft von elastischen Mitteln (26) zusammenwirkt, **dadurch gekennzeichnet**, dass das der Einlaufseite des Druckmediums zugekehrte Ende (22) des Schaftes (10) eine Umfangsnut (13) aufweist, die eine Tragscheibe (11) formschlüssig aufnimmt, die aus zwei zusammenfügbaren Halbkörpern (12) besteht, die einen den Schaft (10) im Bereich der Umfangsnut (13) umfassenden mittleren Sitz (31) aufweisen, dass jeder Halbkörper (12) zumindest eine Durchlassöffnung (25) für das zugeführte Medium aufweist und dass die zusammengebaute Tragscheibe (11) in einem im Körper (9) des Schnellverbindungsstückes (1) vorgesehenen Sitz (30) eingesetzt und mit demselben fest verbunden ist.

2. Schnellverbindungsstück nach Anspruch 1, **dadurch gekennzeichnet**, dass jeder Halbkörper (12) wenigstens eine vom Medium durchströmte, bogenförmig verlaufende Öffnung (25) aufweist.

3. Schnellverbindungsstück nach Anspruch 2, **dadurch gekennzeichnet**, dass die bogenförmige Öffnung (25) entlang einem Halbkreis verläuft.

4. Schnellverbindungsstück nach Anspruch 1, **dadurch gekennzeichnet**, dass das der Mediumeinlaufseite zugekehrte Ende (22) des Schaftes (10) halbkugelförmig ausgebildet ist.

5. Schnellverbindungsstück nach Anspruch 1, **dadurch gekennzeichnet**, dass das der Mediumeinlaufseite zugekehrte Ende (22) des Schaftes (10) parabelförmig ausgebildet ist.

6. Schnellverbindungsstück nach Anspruch 1, **dadurch gekennzeichnet**, dass es sich bei den Halbkörpern (12) um Sinterkörper handelt.

7. Schnellverbindungsstück nach Anspruch 1, **dadurch gekennzeichnet**, dass es sich bei den Halbkörpern (12) um druckgegossene Körper handelt.

8. Schnellverbindungsstück nach Anspruch 1, **dadurch gekennzeichnet**, dass es sich bei den Halbkörpern (12) um aus Kunststoff hergestellte Körper handelt.
